# EUROPÄISCHE PATENTSCHRIFT

(11) **EP 0 543 777 B1**
(45) Veröffentlichungstag und Bekanntmachung des Hinweises auf die Patenterteilung: **27.03.1996**
(21) Anmeldenummer: 92810870.3
(22) Anmeldetag: 10.11.1992
(51) Int. Cl.: F16C 23/08

(54) **Lageranordnung mit einem Radialwälzlager**
Bearing device with a radial rolling bearing
Dispositif de palier avec un roulement radial

(30) Priorität: 21.11.1991 CH 3406/91
(43) Veröffentlichungstag der Anmeldung: 26.05.1993
(73) Patentinhaber: GRAPHA-HOLDING AG, CH-6052 Hergiswil (CH)
(72) Erfinder: Oppliger, Jean-Claude, CH-8155 Niederhasli (CH); Strässler, René, W-7893 Jestetten 1 (DE)

(56) Entgegenhaltungen:
- DE-A- 2 927 447
- DE-A- 3 102 558
- US-A- 1 972 581
- US-A- 3 637 272

## Beschreibung

Die Erfindung betrifft eine Lageranordnung nach dem Oberbegriff des unabhängigen Patentanspruchs 1.

Eine solche Lageranordnung ist im Stand der Technik durch die DE-A-31 02 558 bekannt geworden. Diese Schrift zeigt in Abbildung III eine Lageranordnung, bei der die äussere Fläche eines Kugellageraussenrings ballig ausgebildet ist und in eine sphärische Bohrung eines Lagergehäuses eingesetzt ist. Bei dieser Anordnung können Fluchtungsfehler der Welle ausgeglichen werden. Ein Umbau in ein Loslager ist jedoch weder vorgesehen noch ohne weiteres möglich.

Im Stand der Technik ist zudem eine Lageranordnung bekannt, die sowohl als Loslager als auch als Festlager einbaubar ist. Das Radialwälzlager ist hier ein Pendelkugellager, das mit einer Spannhülse auf einer Welle befestigt werden kann. Beim Einbau als Festlager wird zwischen dem Aussenring des Pendelkugellagers und einem Flanschlagergehäuse ein Festring eingesetzt. Der Festring verhindert eine axiale Verschiebung des Pendelkugellagers im Flanschlagergehäuse. Wird der Festring entfernt bzw. weggelassen, so ist das Pendelkugellager in Axialrichtung begrenzt verschiebbar. Durch diese Verschiebbarkeit können in axialer Richtung Einbautoleranzen oder Wärmedehnungen ausgeglichen werden. Da hier das Radialwälzlager ein Pendelkugellager ist, ist in beiden Fällen, also sowohl als Festlager als auch als Loslager, das Lager weitgehend unempfindlich gegen Fluchtungsfehler der Welle zum Flanschlagergehäuse und auch gegen Durchbiegungen der Welle, da sich der Innenring des Pendelkugellagers mit dem Kugel satz um den Lagermittelpunkt im Aussenring schwenkend einstellen kann. Die bekannte Lageranordnung kann somit wahlweise als Los- und Festlager eingebaut werden und ist aufgrund der bekannten Eigenschaften des Pendekugellagers auf Fluchtungsfehler der Welle unempfindlich.

Bei dieser Lageranordnung bestehen die Nachteile, dass Pendelkugellager wesentlich kleinere Tragzahlen aufweisen als beispielsweise wesentlich kostengünstigere Rillenkugellager und dass zudem beim Pendelkugellager eine Abdichtung wesentlich aufwendiger ist als beispielsweise bei einem Rillenkugellager. Ein weiterer Nachteil wird darin gesehen, dass der Festring beim Einbau als Loslager weggeworfen werden muss.

Der Erfindung liegt die Aufgabe zugrunde, eine Lageranordnung der genannten Art zu schaffen, die wahlweise als Loslager oder als Festlager einbaubar ist, und die in beiden Fällen unempfindlich gegen Fluchtungsfehler der Welle ist. Die Lageranordnung soll wirtschaftlich in einer Massenproduktion herstellbar sein und eine minimale Anzahl von Einzelteilen aufweisen. Sie soll zudem auch durch unqualifizierte Arbeitskräfte leicht und rasch montierbar sein. Die Aufgabe ist durch die Erfindung gemäss Anspruch 1 gelöst.

Die erfindungsgemässe Lageranordnung weist die oben genannten Vorteile der bekannten Lageranordnung auch dann auf, wenn das Radialwälzlager ein Rillenkugellager ist. Ob das Lager ein Fest- oder Loslager ist, wird durch die Orientierung des Gehäuseinnenteils im Gehäuseaussenteil bestimmt. Bei der Montage der Lageranordnung wird somit der Gehäuseinnenteil in der einen oder anderen Orientierung in das Gehäuseaussenteil eingesetzt. In keinem Fall muss somit ein Teil der Lageranordnung weggeworfen werden. Es ist deshalb auch jederzeit möglich, ein Festlager in ein Loslager und umgekehrt umzubauen. Da wie erwähnt, Rillenkugellager verwendet werden können, ist die Abdichtung kein Problem.

Ein wesentlicher Vorteil der erfindungsgemässen Lageranordnung wird darin gesehen, dass das Lagergehäuse, also der Gehäuseaussenteil und der Gehäuseinnenteil aus Kunststoff, beispielsweise im Spritzgussverfahren hergestellt werden können. Gegenüber einem üblichen Gussgehäuse, kann das Flanschlagergehäuse bei der erfindungsgemässen Lageranordnung somit wesentlich kostengünstiger hergestellt werden.

Weitere vorteilhafte Merkmale ergeben sich aus den abhängigen Ansprüchen und der nachfolgenden Beschreibung sowie der Zeichnung. Ein Ausführungsbeispiel der Erfindung wird nachfolgend anhand der Zeichnung näher erläutert. Es zeigen:
- Fig. 1: ein Schnitt durch eine Welle mit einem Loslager und einem Festlager gemäss der Erfindung,
- Fig. 2: eine Ansicht einer erfindungsgemässen Lageranordnung,
- Fig. 3: ein Radialschnitt durch einen Teil einer erfindungsgemässen Lageranordnung, und
- Fig. 4: ein Radialschnitt durch einen Teil einer erfindungsgemässen Lageranordnung.

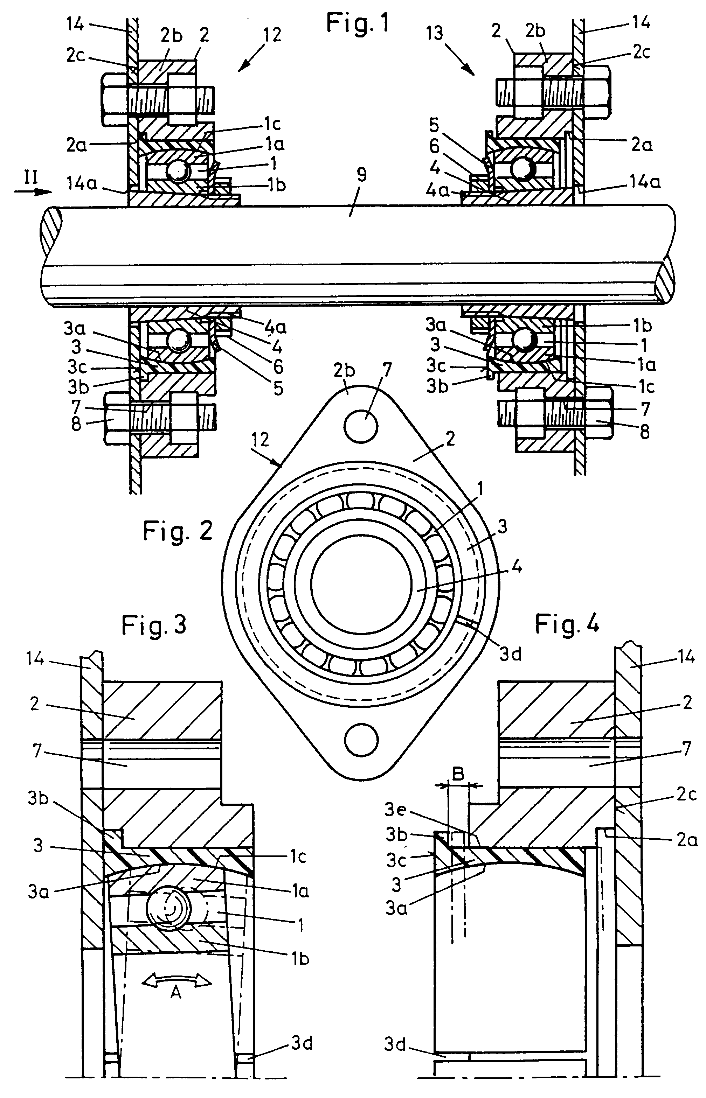

Die Fig. 1 zeigt hier rein schematisch ein Maschinengestell 14, an dem mit einem Festlager 12 und einem Loslager 13 eine Welle gelagert ist. Die Lager 12 und 13 bestehen aus gleichen Teilen. Der Unterschied besteht lediglich darin, dass ein Gehäuseinnenteil 3 beim Festlager 12 axial unverrückbar ist, während beim Loslager 13 dieser sich bezüglich eines Gehäuseaussenteils 2 in axialer Richtung verschieben kann. Dies wird erreicht, indem der Gehäuseinnenteil 3 beim Montieren der Lageranordnung unterschiedlich orientiert eingesetzt wird.

Die Lageranordnungen 12 und 13 weisen jeweils ein Rillenkugellager 1 mit einem Aussenring la und einem Innenring 1b auf. Mit einer Spannhülse 4 ist jeweils der Innenring 1b fest mit der Welle 9 verbunden. Die Verbindung ist gesichert mittels einer Nutenmutter 6, die auf ein Aussengewinde 4a des Spannringes 4 aufgeschraubt ist. Der Aussenring 1a des Rillenkugellagers 1 weist jeweils eine konvexe sphärische Aussenfläche 1c auf. Ein entsprechende aber konkave sphärische Innenfläche 3a besitzt der Gehäuseinnenteil 3, der wie ersichtlich wesentlich breiter ist als das Rillenkugellager 1. Damit der Gehäuseinnenteil 3 auf das Rillenkugellager 1 aufgesetzt werden kann, ist dieser an einer Stelle durch einen Schnitt 3d gesprengt, wie Fig. 2 zeigt. Die Aussenseite 3e des Gehäuseinnenteils 3 ist zylindrisch und er weist einen radial nach aussen vorspringenden Flansch 3b auf. Dieser Flansch 3b ist bündig mit einer ebenen Aussenseite 3c des Gehäuseteils 3.

Das Innenteil 3 ist in eine zylindrische Ausnehmung eines Gehäuseaussenteils 2 spielfrei eingesetzt. Dieses Gehäuseaussenteil 2 besitzt zwei radial vorstehende Befestigungslappen 2b (Fig. 1) die jeweils ein Schraubenloch 7 aufweisen, durch welche zur Befestigung des Gehäuseaussenteils 2 am Gestell 14 jeweils eine Schraube 8 eingesetzt ist. Der Gehäuseaussenteil 2 kann auch mehr als zwei Befestigungslappen 2b aufweisen und er kann auch als Lagerbock oder dergleichen ausgebildet sein. Weiter weist der Gehäuse-aussenteil 2 eine ringförmige Ausnehmung 2a auf, die so ausgebildet ist, dass sie den Flansch 3b des Gehäuseinnenteils 3 aufnehmen kann, wie in Fig. 1 beim Festlager 12 gezeigt.

Ist nun die Lageranordnung als Festlager 12 montiert, so wird der Gehäuseinnenteil 3 so eingesetzt, dass der Flansch 3b in die Ausnehmung 2a des Gehäuseaussenteils 2 eingesetzt ist. Die Ausseneite 3c des Gehäuseinnenteils 3 ist dann bündig mit der Seite 2c des Gehäuseaussenteils 2, die am Gestell 14 anliegt. Der Flansch 3b bildet dann somit einen Anschlag, der eine Bewegung des Gehäuseinnenteils 3 in beiden Richtungen verhindert. Eine axiale Bewegung ist dann auch für das Rillenkugellager 1 nicht möglich. Zum Ausgleich von Fluchtungsfehlern oder Durchbiegungen der Welle 9 kann das Rillenkugellager 1 jedoch um den Lagermittelpunkt verschwenkt werden, wie in Fig. 3 schematisch mit einem Doppelpfeil A dargestellt.

Wird der Gehäuseinnenteil 3 so in den Gehäuseaussenteil 2 eingesetzt, dass der Flansch 3b sich auf der Gegenseite der Ausnehmung 2a befindet, so ist der Gehäuseinnenteil 3 in Achsrichtung im Gehäuseaussenteil 2 verschiebbar. Der Gehäuseinnenteil 3 wird bei der Montage vorzugsweise so eingesetzt, dass in beiden Achsrichtungen Verschiebungen B (Fig. 1) möglich sind. Das Lager bildet dann ein Loslager 13 und in beiden axialen Richtungen der Welle können Einbautoleranzen oder Wärmedehnungen im Bereich der Verschiebewege A und B ausgeglichen werden. Die Verschwenkbarkeit des Kugellagers 3 um den Lagermittelpunkt, wie in Fig. 3 gezeigt, ist auch beim Loslager 13 möglich. Bei diesem Lager 13 können somit in beiden Richtungen axiale Toleranzen als auch Fluchtungsfehler der Welle 9 ausgeglichen werden.

Der Umbau eines Loslagers 13 in ein Festlager 12 ist ersichtlich sehr einfach, da lediglich der Gehäuseinnenteil 3 ausgebaut und um 180° gewendet wieder eingebaut werden muss.

Die beiden Gehäuseteile 2 und 3 sind vorzugsweise aus Kunststoff, beispielsweise POM oder einem geeigneten Polyamid hergestellt. Dies hat den wesentlichen Vorteil, dass diese Teile sehr kostengünstig im Spritzgussverfahren hergestellt werden können, und dass Probleme mit Rostbildung vermieden sind. Wie bereits erwähnt, kann das Kugellager 1 ein geeignetes handelsübliches Kugellager sein. Denkbar sind jedoch auch andere Radiallager. Diese müssen aber jeweils eine sphärische Aussenseite aufweisen. Wesentlich ist, dass zwischen den beiden sphärischen Flächen eine relative Schwenkbewegung um den Lagermittelpunkt möglich ist.

Die erfindungsgemässe Lageranordnung eignet sich inbesondere für die Lagerung von Wellen an Förderanlagen, bei welchen ein gespannter Riemen an der Welle anliegt. Die hier auftretenden Wellendurchbiegungen können mit der erfindungsgemässen Lageranordnung ausgeglichen werden. Welle und Lager werden geschont und dadurch die Lebensdauer verlängert. Ebenfalls ist bei der erfindungsgemässen Lageranordnung Rostbildung weitgehend vermieden. Sind die Gehäuseteile 2 und 3 aus einem geeigneten Kunststoff hergestellt, so wirken sie zudem schalldämmend.

## Patentansprüche

1. Lageranordnung mit einem Radiallager (1), insbesondere Radialwälzlager, das beispielsweise mit einer Spannhülse (4) auf einer Welle (9) zu befestigen ist, und mit einem Lagergehäuse (2,3), insbesondere Flanschlagergehäuse, in welches das Radiallager (1) eingebaut ist und das an einem Maschinengestell (14) zu befestigen ist, wobei der Aussenring (1a) des Radiallagers (1) eine sphärische Aussenfläche (1c) aufweist und in das Lagergehäuse (2,3) eingesetzt ist, dessen Innenseite eine Innenfläche (3a) aufweist, die korrespondierend zur Aussenfläche (1c) des Aussenrings (1a) ausgebildet ist, dadurch gekennzeichnet, dass
a) das Lagergehäuse einen Gehäuseinnenteil (3) und einen Gehäuseaussenteil (2) aufweist, wobei der Gehäuseaussenteil (2) an einem Maschinengestell (14) zu befestigen ist und das Radiallager (1) in den Gehäuseinnenteil (3) eingesetzt ist;
b) bestimmt durch die Orientierung des Gehäuseinnenteils (3) die Lageranordnung wahlweise als Festlager oder Loslager montierbar ist; und
c) der Gehäuseinnenteil (3) im Fall eines Loslagers axial verschiebbar und im Fall eines Festlagers axial unverschiebbar in den Gehäuseaussenteil (2) eingesetzt ist.

2. Lageranordnung nach Anspruch 1, dadurch gekennzeichnet, dass der Gehäuseinnenteil (3) ringförmig ausgebildet ist und einen Aussenflansch (3b) aufweist, der beim Einbau als Festlager (12) am Gehäuseaussenteil (2) einen Anschlag bildet.

3. Lageranordnung nach Anspruch 2, dadurch gekennzeichnet, dass der Gehäuseaussenteil (2) eine ringförmige Ausnehmung (2a) aufweist, in welche der Flansch (3b) zur Bildung eines Festlagers einsetzbar ist.

4. Lageranordnung nach Anspruch 3, dadurch gekennzeichnet, dass der Flansch (3b) bündig mit einer Aussenseite (2c) des Gehäuseaussenteils (2) ist.

5. Lageranordnung nach einem der Ansprüche 1 bis 4, dadurch gekennzeichnet, dass der Gehäuseaussenteil (2) und der Gehäuseinnenteil (3) aus Kunststoff hergestellt sind.

6. Lageranordnung nach Anspruch 5, dadurch gekennzeichnet, dass die Gehäuseteile (2,3) aus Polyoxymethylen (POM) oder einem geeignetem Polyamid hergestellt sind.

7. Lageranordnung nach einem der Ansprüche 1 bis 6, dadurch gekennzeichnet, dass der Gehäuseinnenteil (3) breiter ist als das Radiallager (1).

8. Lageranordnung nach einem der Ansprüche 1 bis 7, dadurch gekennzeichnet, dass das Radiallager (1) ein Rillenkugellager ist.

## Claims

1. A bearing arrangement having a radial bearing (1), particularly a radial rolling bearing, which is to be fixed on a shaft (9) by means of a clamping sleeve (4) for example, and having a bearing housing (2,3), particularly a flanged bearing housing, in which the radial bearing (1) is installed and which is to be fixed to a machine frame (14), wherein the outer ring (1a) of the radial bearing (1) has a spherical outer surface (1c) and is inserted in the bearing housing (2,3), the inside of which has an inner surface (3a) which is of corresponding construction to the outer surface (1c) of the outer ring (1a), characterised in that
a) the bearing housing comprises a housing inner part (3) and a housing outer part (2), wherein the housing outer part (2) is to be fixed on a machine frame (14) and the radial bearing (1) is inserted in the housing inner part (3);
b) the bearing arrangement can be mounted, determined by the orientation of the housing inner part (3), as a fixed bearing or a movable bearing according to choice; and
c) the housing inner part (3) is inserted in the housing outer part (2) so that it is axially displaceable in the case of a movable bearing and axially non-displaceable in the case of a fixed bearing.

2. A bearing arrangement according to claim 1, characterised in that the housing inner part (3) is of annular construction and has an outer flange (3b) which forms a stop on the housing outer part (2) on installation as a fixed bearing (12).

3. A bearing arrangement according to claim 2, characterised in that the housing outer part (2) has an annular recess (2a) in which the flange (3b) can be inserted in order to form a fixed bearing.

4. A bearing arrangement according to claim 3, characterised in that the flange (3b) is flush with an outer surface (2c) of the housing outer part (2).

5. A bearing arrangement according to any one of claims 1 to 4, characterised in that the housing outer part (2) and the housing inner part (3) are manufactured from plastic.

6. A bearing arrangement according to claim 5, characterised in that the housing parts (2,3) are manufactured from polyoxymethylene (POM) or a suitable polyamide.

7. A bearing arrangement according to any one of claims 1 to 6, characterised in that the housing inner part (3) is wider than the radial bearing (1).

8. A bearing arrangement according to any one of claims 1 to 7, characterised in that the radial bearing (1) is a deep groove ball bearing.

## Revendications

1. Dispositif de portée comprenant un palier radial (1), notamment un palier radial à roulement destiné, par exemple, à être fixé sur un arbre (9) par une douille de serrage (4), et un carter (2, 3) de palier, en particulier un carter de palier à bride dans lequel le palier radial (1) est intégré, et qui est destiné à être fixé au bâti (14) d'une machine, la bague extérieure (1a) du palier radial (1) présentant une surface externe sphérique (1c), et étant insérée dans le carter (2, 3) de palier dont la face intérieure comporte une surface interne (3a) réalisée pour correspondre à la face externe (1c) de la bague extérieure (1a), caractérisé par le fait que
a) le carter de palier comprend une partie intérieure (3) et une partie extérieure (2), la partie extérieure (2) dudit carter étant destinée à être fixée au bâti (14) d'une machine, et le palier radial (1) étant inséré dans la partie intérieure (3) dudit carter ;
b) en fonction de l'orientation de la partie intérieure (3) du carter, le dispositif de portée peut être sélectivement monté comme un palier fixe, ou comme un palier libre ; et
c) la partie intérieure (3) du carter est insérée, dans la partie extérieure (2) dudit carter, avec faculté de coulissement axial dans le cas d'un palier libre, et sans faculté de coulissement axial dans le cas d'un palier fixe.

2. Dispositif de portée selon la revendication 1, caractérisé par le fait que la partie intérieure (3) du carter est de réalisation annulaire et comporte une bride extérieure (3b) qui, lors de l'intégration en tant que palier fixe (12), forme une butée sur la partie extérieure (2) dudit carter.

3. Dispositif de portée selon la revendication 2, caractérisé par le fait que la partie extérieure (2) du carter présente un évidement annulaire (2a), dans lequel la bride (3b) peut être insérée en vue de former un palier fixe.

4. Dispositif de portée selon la revendication 3, caractérisé par le fait que la bride (3b) vient à fleur avec une face extérieure (2c) de la partie extérieure (2) du carter.

5. Dispositif de portée selon l'une des revendications 1 à 4, caractérisé par le fait que la partie extérieure (2) du carter et la partie intérieure (3) dudit carter sont fabriquées en matière plastique.

6. Dispositif de portée selon la revendication 5, caractérisé par le fait que les parties (2, 3) du carter sont fabriquées en polyoxyméthylène (POM), ou en un polyamide approprié.

7. Dispositif de portée selon l'une des revendications 1 à 6, caractérisé par le fait que la partie intérieure (3) du carter est plus large que le palier radial (1).

8. Dispositif de portée selon l'une des revendications 1 à 7, caractérisé par le fait que le palier radial (1) est un roulement à billes rainuré.
